Europäisches Patentamt

European Patent Office

Office européen des brevets

(11) Publication number : **0 516 576 A2**

(12) **EUROPEAN PATENT APPLICATION**

(21) Application number : **92630054.2**

(22) Date of filing : **21.05.92**

(51) Int. Cl.$^5$ : **G06K 9/20, G06K 9/48**

(30) Priority : **28.05.91 IL 98293**

(43) Date of publication of application :
**02.12.92 Bulletin 92/49**

(84) Designated Contracting States :
**AT BE CH DE DK ES FR GB GR IT LI NL PT SE**

(71) Applicant : **SCITEX CORPORATION LTD.**
**Hamada Street**
**46 733 Herzlia Bet (IL)**

(72) Inventor : **Zeira, Assaf**
**Bnei Atarot 60991 (IL)**

(74) Representative : **Waxweiler, Jean et al**
**OFFICE DENNEMEYER & ASSOCIATES Sàrl,**
**P.O. Box 1502**
**L-1015 Luxembourg (LU)**

(54) **Method of discriminating between text and graphics.**

(57)   A method of analyzing a source image to separate text from graphics, by : (a) scanning and digitizing the source image to obtain a binary image including black and white objects ; (b) filtering out the noise from the binary image ; (c) extracting the contours therefrom of the black objects and the white objects ; (d) evaluating inclusion relationships between the objects, and generating a tree-like structure of such relationships ; (e) utilizing the contours for measuring the objects to obtain the shape properties of each object ; (f) effecting classification of the objects as graphics or text according to the measured shape properties and then generating tree-like structure of the inclusion relationships ; (g) and utilizing the source image and the classification of the objects for generating outputs representing graphics and text, respectively.

FIG. 1

EP 0 516 576 A2

SOURCE

GRAPHICS

TEXT

FIG. 1a

## BACKGROUND OF THE INVENTION

The present invention relates to a method of analyzing documents or other source images in order to discriminate between text and graphics, and thereby to separate text from graphics.

Discrimination between text and graphics is frequently essential when processing documents. For example, some document processing applications are interested only in graphics (or text). Other document processing applications apply different processes to text and graphics and therefore have to segment the image into regions of text, graphics and half-tone.

All applications discriminating between text and graphics require a definition distinguishing between the two. Some define text as characters grouped in strings, whereas characters which appear isolated are considered as graphics. Others define text as characters wherever they appear, regardless of font or size. The latter definition appears more appropriate but results in misclassifications; for example, a circle might be misclassified as the character "o". Whichever definition is used, most algorithms proposed in the literature do not perform true character recognition, which is far more expensive, but rather use simple hueristics for classification.

There are two principal approaches by which text is discriminated from graphics: "top-down" and "bottom-up". In the "top-down" approach, the image is first divided into major regions which are further divided into subsequent regions. In the "bottom-up" approach, the image is first processed to determine the individually connected components. These components, when identified as characters, are grouped into words, words into sentences, and so on. The top-down approach is knowledge based. It is suitable only for images which are composed of strictly separated regions of text and graphics. Text words which lie within graphic regions are classified as graphics. The bottom-up approach, on the other hand, is more reliable but time consuming. Therefore, the two approaches should be used in conjunction; first a top-down method will detect the graphics regions, and then a bottom-up method will detect the text within these regions.

The run-length smearing algorithm (RLSA) is an example of a top-down method. This algorithm segments and labels the image into major regions of text lines, graphics and half-tone images. The algorithm replaes 0's by 1's if the number of adjacent 0's is less than a predefined threshold (0's correspond to white pixels and 1's correspond to black pixels). This one dimensional operation is applied line-by-line as well as column-by-column to the two dimensional bitmap image. The two results are then combined by applying local AND to each pixel location. The resulting image contains black blocks wherever printed material appears on the original image producing an effect of smearing. The blocks are then labeled as text lines, graphics or half-tone images using statistical pattern classification (for example - number of black pixels in block, number of horizontal white/black transitions).

The RLSA algorithm is fast but is restricted to a certain class of images. No skewed text lines are allowed in these images, and the dimensions of characters must fit the predefined threshold parameters; otherwise, characters will remain isolated (if parameters are too small) or text lines will get combined (if parameters are too big).

After rough classification is received by a "top-down" algorithm, the graphic blocks are further processed by a "bottom-up" algorithm to obtain a detailed classification. Bottom-up algorithms start with a process to determine the individually connected components. Several algorithms are known which perform connected components detection. These algorithms can be combined into chain code generation algorithms in order to extract as much information as possible during one raster scan over the image. Such "combined" algorithm can operate fast on a run-length formated image (run time is proportional to the number of "runs" in the image which is roughly proportional to the length of boundaries in the image). At the end of such process, the following raw information is available for each connected component: (a) area (number of pixels forming the connected component); (2) chain code description of boundaries (a chain for each boundary); and (3) identification of the enclosing connected component, and of the enclosed connected components.

This raw information can be further processed to resolve other properties: (4) enclosing rectangle; (5) Euler number (Euler number=1 - number of holes in shape); (6) perimeter length (total length of boundaries); and (7) hull area.

More shape properties other than those of (4)-(7) can be resolved from the information of (1)-(3), but properties (4)-(7) are most valuable for discrimination of character symbols in a minimum effort. The Euler number is available with no additional effort (Euler number=2 - number of chains). The enclosing rectangle can be computed in one scan over the chains. Perimeter length equals roughly the total number of links in the chain code. Better estimation can be obtained in other methods, but this estimation is fairly good. The hull area can be computed by first finding the convex-hull polygon, and then finding the area of that polygon which is a simple task.

Most algorithms which discriminate text according to local shape features use the properties listed above. The algorithms which are based on local shape features have two major flaws: (1) they may misclassify graphics as text (a circle may classify as "o") and (2) they can not detect abnormal strings (for example, they can not detect a dashed line as graphics; instead, each minus sign is detected as a character symbol and the whole string is detected as text).

These flaws were fixed in a known Text-String Separation algorithm but at a high price of processing time. The clustering process of characters into strings takes most of the time. The algorithm uses Hough transform to detect collinear components and then groups them into words and phrases if they conform to some statistical pattern. The algorithm succeeds to classify abnormal strings as graphics, but is sensitive to parameter settings; a wrong selection may cause connected components which belong to one line to be grouped in different cells (undergrouping), or it may cause several parallel strings to be grouped into a single cell (over-grouping). The Hough transform may also mistakenly detect a group of vertical components as a vertical string although these components are part of horizontal text lines.

Another difficulty is that strings which have arc-orientation (rather than linear orientation) are not discriminated as text. The same happens with short isolated strings (strings containing less than three characters).

All of the algorithms mentioned above fail to properly discriminate between images which contain a large variety of font sizes. Moreover, they can not handle blocks of reversed text (reversed text is white text over a black background).

## OBJECTS AND SUMMARY OF THE INVENTION

An object of the present invention is to provide a novel method, having advantages in one or more of the above respects, for analyzing a source image to separate text from graphics.

According to the present invention, there is provided a method of analyzing a source image to separate text from graphics, comprising a method of analyzing a source image to separate text from graphics, comprising (a) scanning and digitizing the source image to obtain a binary image including black and white objects; (b) filtering out the noise from the binary image to obtain a filtered binary image; (c) extracting the contours of the black objects and the white objects from the filtered binary image; (d) evaluating inclusion relationships between the objects, and generating a tree-like structure of such relationships; (e) utilizing said contours for measuring the objects to obtain the shape properties of each object; (f) effecting classification of the objects as graphics or text according to the measured shape properties; and the generated tree-like structure of the inclusion relationships; (g) and utilizing said source image and said classification of the objects for generating outputs representing graphics and text, respectively.

According to further features in the preferred embodiment of the invention desribed below, in step (b), the noise is filtered out by dilation of black pixels; in step (e), the objects are measured in a top-down sequence, starting with the object at the root of a tree; and in step (c), extracting the contour of the black objects and the white objects from the filtered binary image is effected by a single scan in which a window is convolved with the filtered binary image in a raster fashion. In addition, the window scans the image along a line and returns an indication of the type of pattern seen from the window and an indication of the center of the window; each type pattern is processed differently to determine whether a new object is started, continued or ended, all objects intersecting the current scan line being processed in parallel.

In the described preferred embodiment, when a maximal point is encountered during the window scan, it is considered to be a starting point of a new object, nut if later the scan indicates it was a maximal point of a previously indicated object, the new object is merged with that of the previously indicated object.

Further features of the invention will be apparent from the description below.

## BRIEF DESCRIPTION OF THE DRAWINGS

The invention is herein described, by way of example only, with reference to the accompanying drawings, wherein:

Fig. 1 is an overall pictorial diagram illustrating one application of the method of the present invention;

Fig. 1a illustrates a typical document including graphics and text in different sizes, orientations and fonts,and the results of its being processed according to the present invention;

Fig. 2 is a flow diagram illustrating the main steps in a method of analyzing a source image to separate text from graphics in accordance with the present invention;

Fig. 3 is a diagram illustrating the scanning and digitizing step (a) in the diagram of Fig. 2;

Fig. 4 is a diagram illustrating the dilation method for filtering noise in accordance with step (b) of the flow diagram of Fig. 2;

Figs. 5a and 5b are flow diagrams illustrating one algorithm for performing step (b) in the flow diagram of Fig. 2; and Figs. 5c and 5d are diagrams helpful in understanding this step;

Fig. 6a is a diagram illustrating the contour detection step (c) in the flow diagram of Fig. 2; and

Fig. 6b more particularly illustrating one example of performing that step;

Figs. 7a and 7b are flow diagrams illustrating an algorithm which may be used for performing step (c);

Fig. 8 is a decision table used in the algorithm of Fig. 7 indicating how the different states are handled;

Fig. 9 is a diagram illustrating the tree-generation step (d) in the flow diagram of Fig. 2;

Fig. 10 is a flow diagram of one algorithm that may be used for performing a polygonal approximation in the object measurement step (e) of Fig. 2;

Figs. 11a and 11b are flow diagrams illustrating one algorithm that may be used in performing the classification step (f) of Fig. 2; and

Fig. 12 is a flow diagram illustrating one algorithm for performing the output-generation step (g) in Fig. 2.

## DESCRIPTION OF A PREFERRED EMBODIMENT

### Overall System

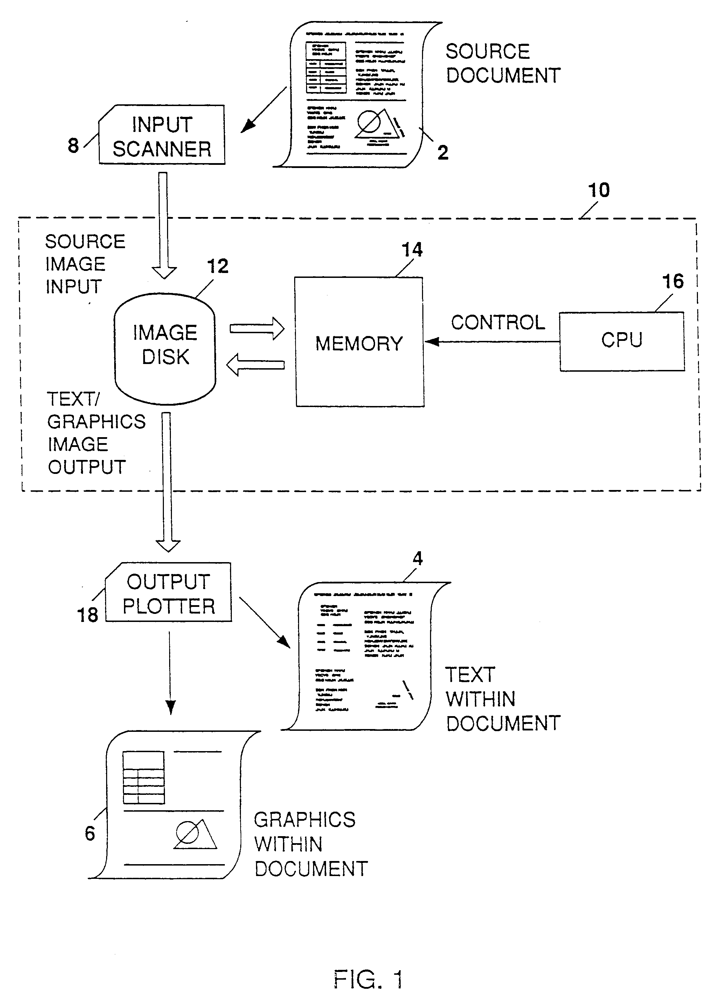

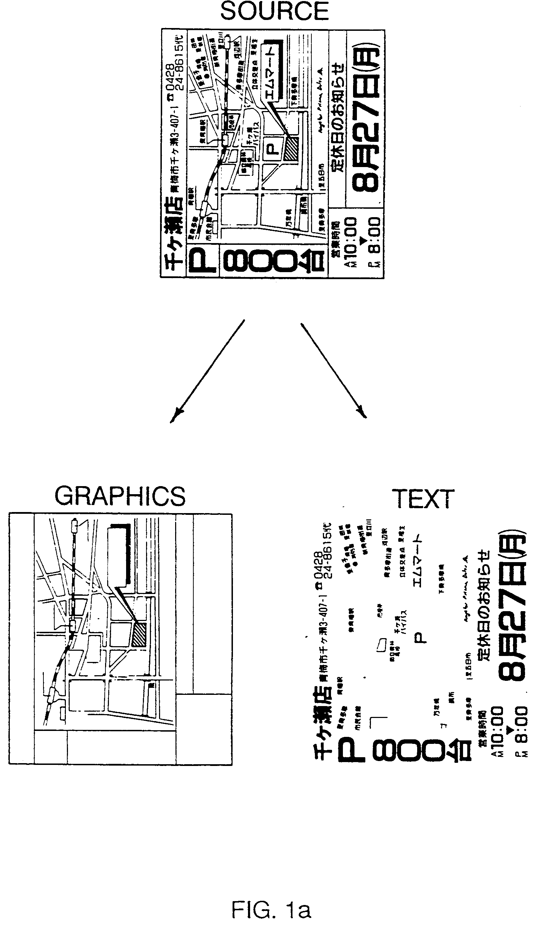

Fig. 1 pictorially illustrates a method of analyzing a source document 2 in accordance with the present invention to separate text from graphics, the text being outputted in document 4, and the graphics being outputted in document 6. For purposes of example and of showing the capability of the method, the source document 2, as shown in enlargement in Fig. 1a, includes graphics and text of different sizes, orientations and fonts.

Thus, the source document 2 containing the source image of both text and graphics is scanned by an optical scanner 8, and its output is fed to an image processing system, generally designaed 10, which includes an image disc 12, a memory 14, and a CPU 16. The image processing system 10 outputs the process information via a plotter 18 in the form of the two documents 4 and 6: document 4 contains the text of the original document 2, and document 6 contains the graphics of the original document 2.

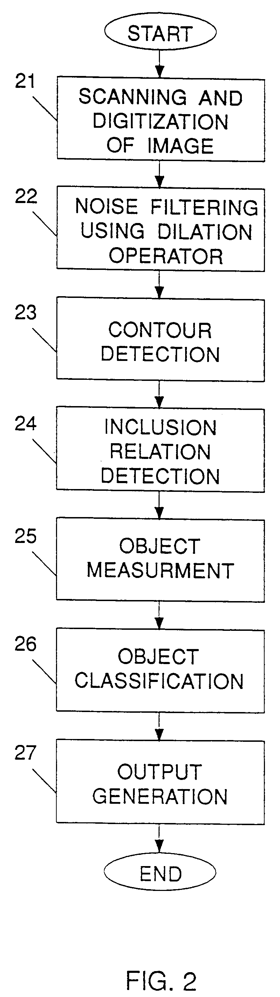

Fig. 2 is a flow diagram illustrating seven basic steps (a-g), generally designated by blocks 21-27, performed by the image processing system 10; as follows:

(a) scans and digitizes the source image (document 2) to obtain a binary image including black and white objects (block 21);

(b) filters out the noise from the binary image to obtain a filtered binary image (block 22);

(c) extracts the contours of the black objects and the white objects from the filtered binary image (block 23);

(d) evaluates the inclusion relationship between the objects and generates a tree-like structure of such relationship (block 24);

(e) utilizes the contours detected in step c for measuring the objects to obtain the shaped properties of each object (block 25);

(f) classifies the objects as graphics or text according to the measured shaped properties and the inclusion relationship obtained in step d (block 26); and

(g) generates, via the output plotter 18, outputs representing text (document 4) and graphics (document 6), respectively (block 27).

Following is a more detailed description of each of the above steps:

### Scanning and Digitizing (Block 21, Fig. 2)

This step is effected to obtain a binary version of the source image. It may be carried out by an optical scanner, a CCD (charge-coupled device) scanner, etc., to produce a binary file on disc or tape (e.g., image disc 12, Fig. 1) containing the bitmap representation of the source image. The bitmap can be a stream of bits with each bit corresponding to a black or a white pixel, or it can be encoded in runs. It will be assumed that a run-length coding is used, by which a sequence of black (or white) pixels are encoded by the colour with the length of the sequence being up to the next transition in colour. A typical resolution of scanning is 50 pixels/mm.

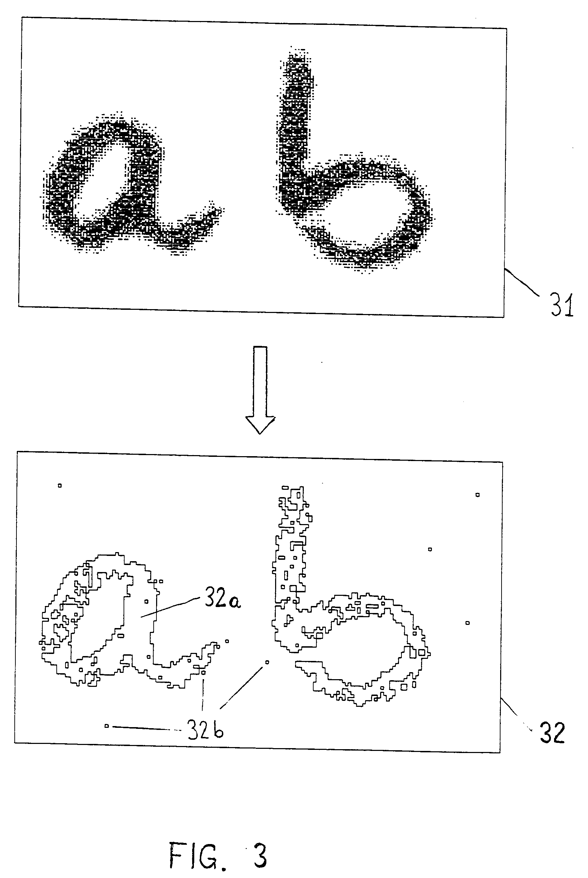

Fig. 3 diagrammatically illustrates the scanning and digitizing step, wherein it will be seen that the source image, as shown at 31, is converted to a digitized bitmap representation of the source image, as shown at 32. It will also be seen that the bitmap representation of the source image 32 in Fig. 3 includes image data 32a and noise 32b.

### Filtering Noise (Block 22, Fig. 2)

The second step performed by the image processing system 10 of Fig. 1, as shown in the block diagram of Fig. 2, is noise filtration, namely the removal of the noise signals 32b in the bitmap representation illustrated at 32 in Fig. 3. This step is carried out by a dilation operator which changes white pixel to black if its distance from the nearest black pixel is below a predefined threshold.

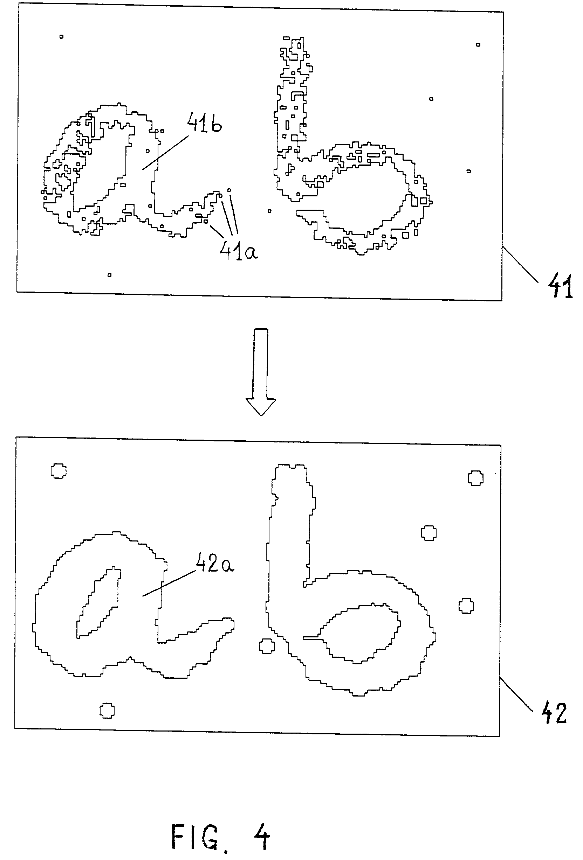

This step is more particularly shown in Fig. 4, wherein it will be seen that the image data before dilation, as shown at 41, includes a number of isolated black pixels, 41a which are very close to a group of black pixels 41b and which are absorbed to form a single group 42a after the dilation step as shown at 42. This operation, which widens the black pixels and therefore connects together isolated pixels, decreases significantly the number of isolated black pixels which are in the surroundings of black objects.

A simple dilation algorithm can be: Set an output pixel to be the conjuctive of all input pixels in its surrounding.

The dilated image 42 is intermediate and is used only to partition the image roughly into regions of black and white objects. Later in the process, as will be described below, these regions will be classified, and the pixels of the original image will be coloured properly according to the class in which they reside.

Noise filtration by dilation provides two advantages: (a) it maintains the basic shape properties of the original objects; and (b) it faciliates the later determination as to which class the black pixels in the original image belong.

Dilation can be achieved in many ways. When performed on a bit map, it can be achieved by simple hardware or software; but when performed on a run-length coded image, it is more complicated.

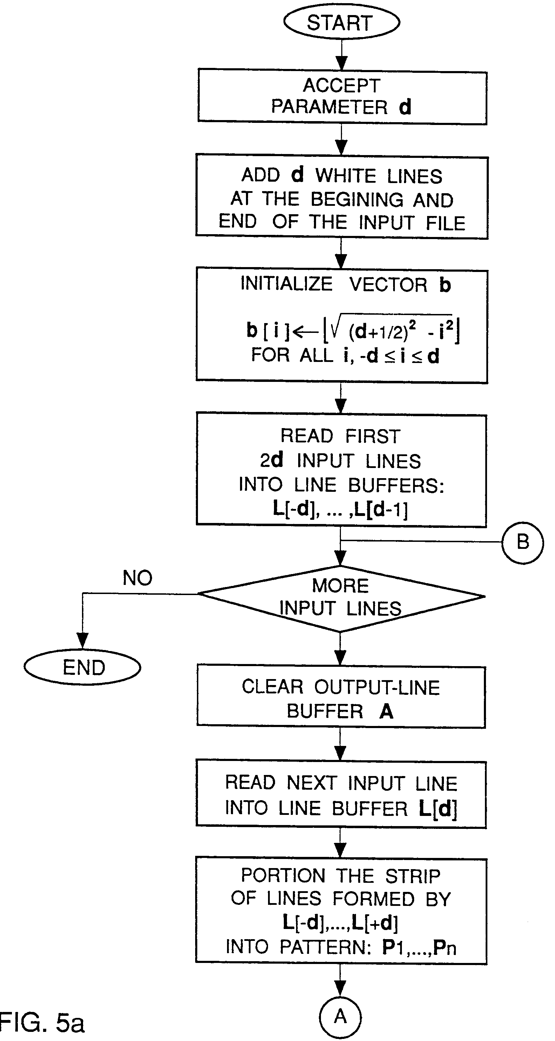

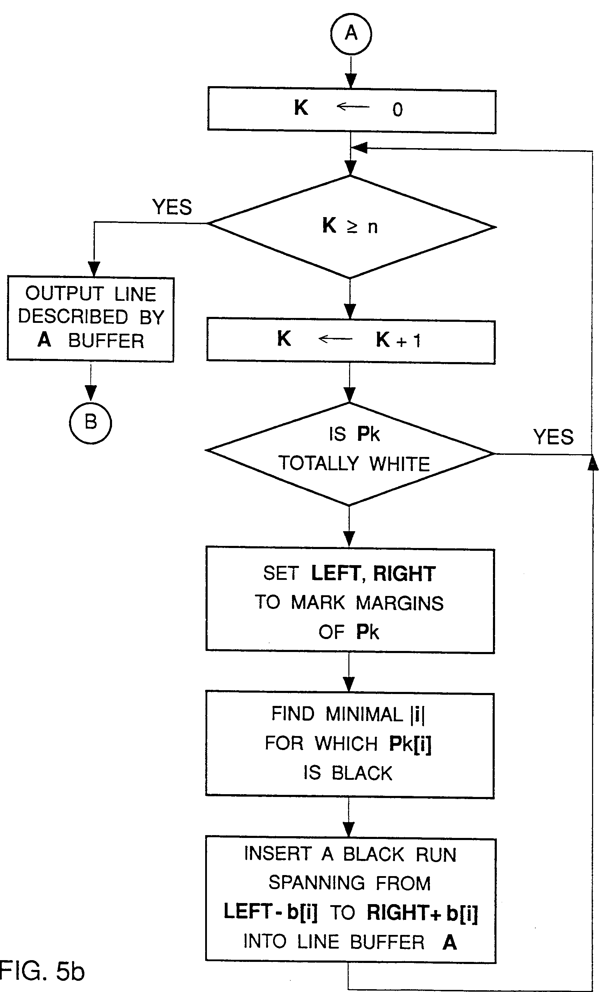

Preferably, in order to utilize the advantages of the run-length coding, a specific apparatus is used operating according to the following algorithm, as illustrated in the flow diagrams of Figs 5a and 5b, and also in Appendix A at the end of this specification.

Contour Detection (Block 23)

In this step, the image obtained by the dilation,is scanned in order to label the objects and to extract their contours. A contour of an object is defined as the chain of line segments which track the boundary of the object separating between black and white pixels. If the object is not solid (i.e., it contains holes), the contour of these holes is extracted as well. Therefore, an object may have more than one contour.

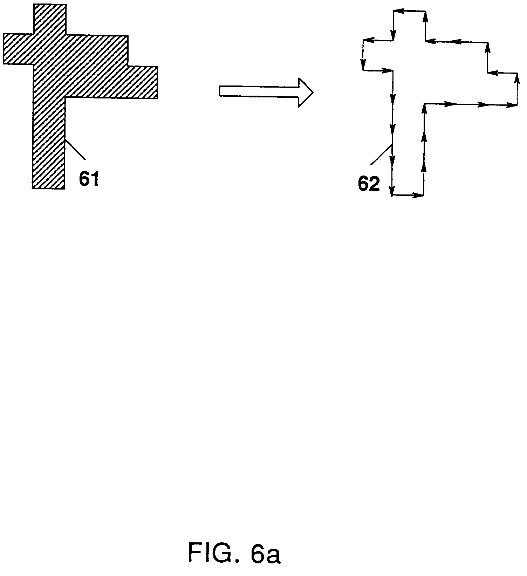

Fig. 6a illustrates the contour extracting step, wherein it will be seen that the black object shown at 61 is converted to the contour 62 constituted of a chain of line segments which track the boundary of the object 61.

Many algorithms are known for such chain generation in order to extract the contour. Some algorithms use a sequential approach, by which a contour is tracked from beginning to end before another contour is tracked. However, this aproach may result in many scans over the image, especially when the image contains many large objects, and therefore may take a considerable period of time.

Preferably, a single scan approach is used in the method of the present invention. In this approach, a 2 x 2 window is convolved with the image in a raster fashion. The raster scan can again benefit from the compact run-length coding since only locations of colour transitions need be examined instead of the whole image.

The general idea of the one-scan approach is as follows: The window scans the image and returns an indication of the type of pattern seen from the window and an indication of the position of the center of the window. Each type of pattern is processed differently to determine whether a new object is started, continued or ended. All objects intersected by the current scan line are processed in parallel. A new object always starts at a maximal point and ends at minimal point, but not all maximal points necessarily start new objects or do all minimal points always end existing objects. The minimal points makes no problem because by the time they are reached, sufficient information is already at hand to determine whether or not they are true end points. However, with the maximal points, there is a problem of ambiguity. At the time a maximal pint is encountered it cannot always be determined whether this point is a local maximum of an existing object or a global maximum in a new object.

In the described process, a maximal point is always considered to be a starting point of a new object. If later on it is discovered that it was a starting point of an existing object, the two objects, the true and the artificial, are merged and the artificial object is deleted.

At each maximal point two chains are started downwards, and at each minimal point two chains are connected. Therefore a contour is intially composed of more than one chain, and only when the object is ended are the chains connected properly to form one closed-loop contour. With each contour two pointers are connected to point at the two objects on the right-hand and left-hand sides of the contour. These pointers enable later to extract the inclusion relationship between the objects.

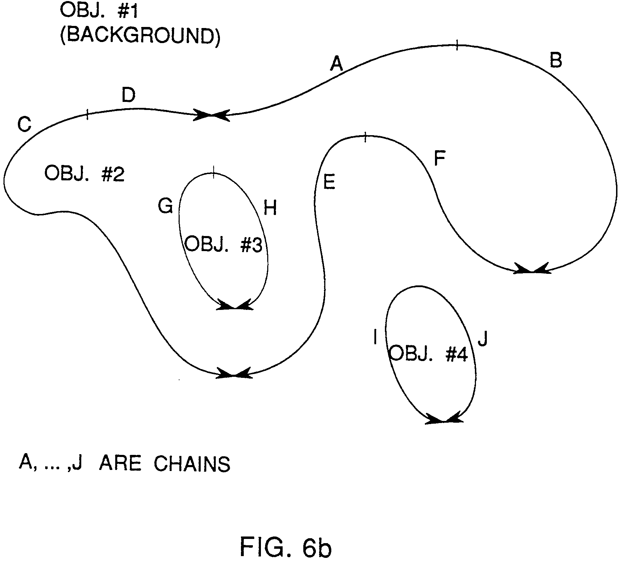

Fig. 6b illustrates a particular case, in which contour 1 is composed of chains A-F, contour 2 is composed of chains G-H, and contour 3 is composed of chains I-J. It will be seen that object 1 (background) is bounded by contours 1 and 3; object 2 is bounded by contours 1 and 2; object 3 is bounded by contour 2, and object 4 is bounded by contour 3.

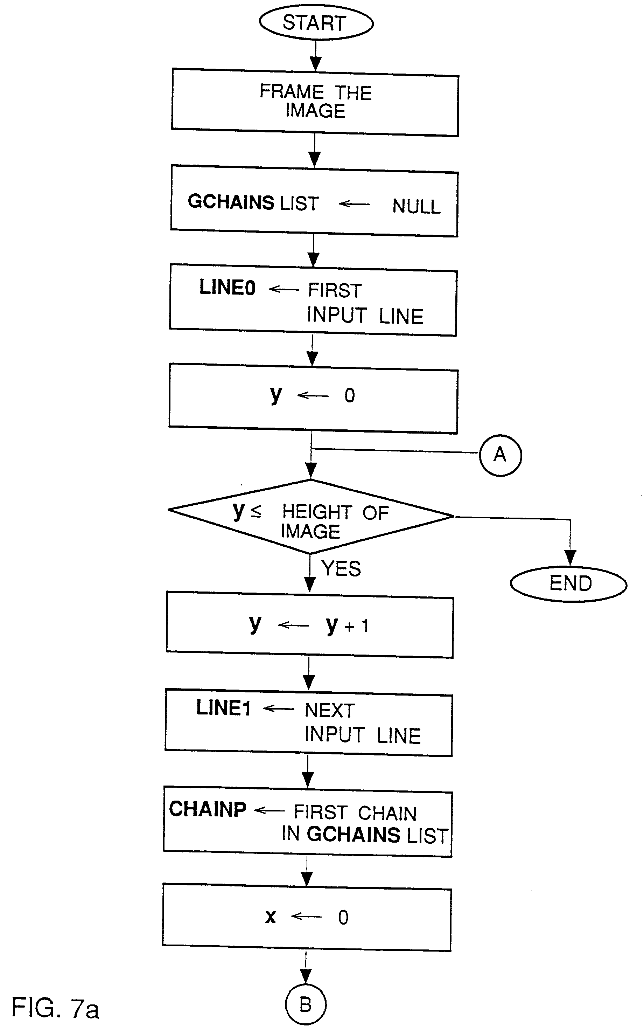

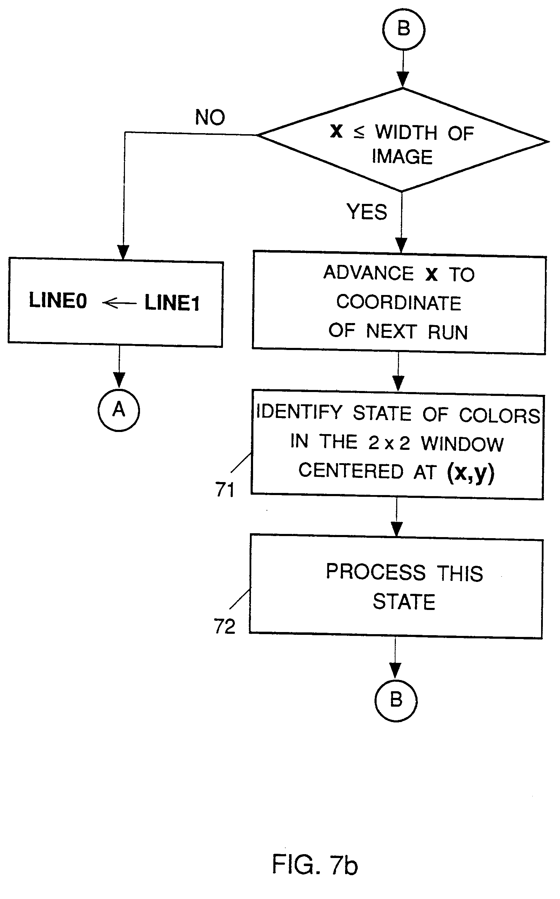

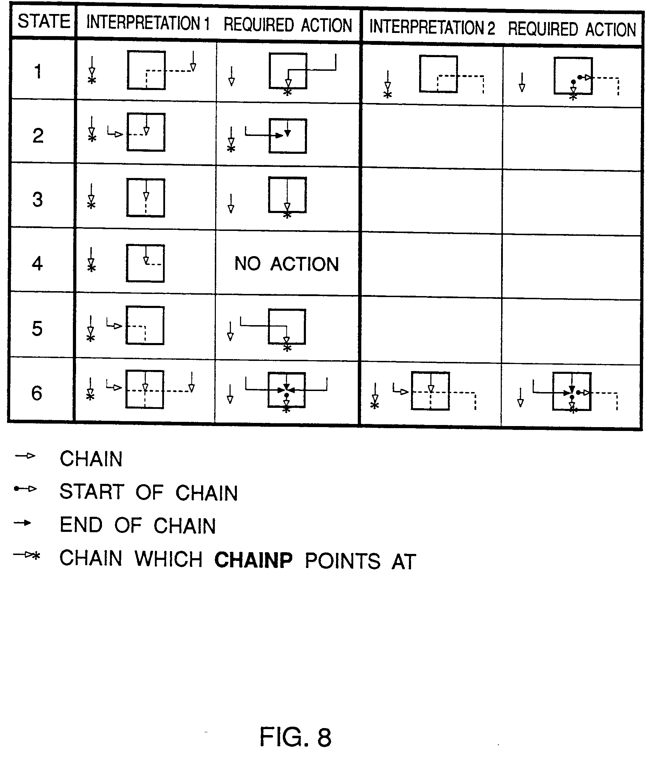

Figs. 7 and 7a illustrate an example of an algorithm which may be used for this step; and Fig. 8 elaborates on the operations of blocks 71 and 72 in Fig. 7b and illustrates a decision table for the different states. Appendix B at the end of this specification illustrates an example of an algorithm for this purpose.

## Tree Generation (Block 24)

In this step, the inclusion relationship between the objects is evaluated, and a tree-like structure of such relationships is generated. This relationship is utilized at the time of classification, since it is sometimes important to have information about the objects included within one object in order to assign it a proper class. This relationship can be extracted easily from the data base of objects and contours produced in the previous step. All that is necessary is to set a pointer from each object to the object which includes it, namely to its predecessor. In that way, a tree-like structure is formed. There is one object which has no predecessor, which is usually the white background.

The predecessor of an object may be found as follows: Assuming that the contours are always directed counter-clockwise, first find out which of the contours is the outmost (it being recalled that an object has more than one contour if it contains holes), and then set the pointer to point at the object on the right side of this contour. This object is the predecessor.

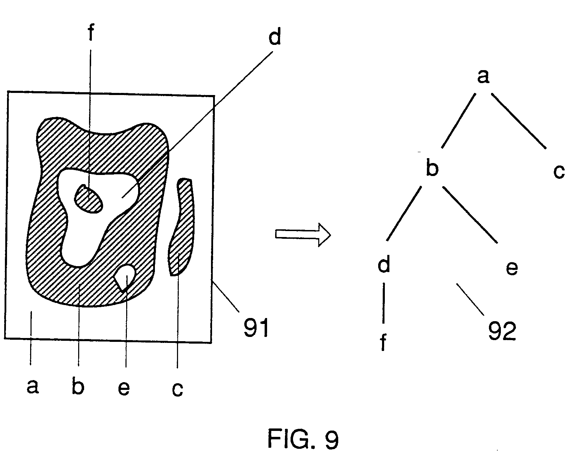

Fig. 9 diagrammatically illustrates the step of determining the inclusion relationship. Graph 92 in Fig. 9 is the tree-like structure obtained from the image 91.

## Object Measurements (Block 25)

This involves measuring the objects to obtain the shape properties of each object. The following primitives are used: (a) area of the object (measured in pixels), (b) number of contours, and (c) perimeter length of each contour (measured in pixels). From these primitives, the following are determined: (a) elongation, (b) hull area, (c) hull eccentricity, (d) black/white ratio, (e) Euler number, and (f) number of sharp corners.

Elongation measures the ratio between the width of the lines forming the object and the overall dimensions of the object. Elongation is computed as follows:

$$Elongation \ = \ \frac{1}{\dfrac{P(P - \sqrt{P^2 - 16A})}{8A} - 1}$$

where A is the area of the object, and P is the perimeter of the object.

Hull is the convex polygon which bounds the object. There are fast algorithms which compute the convex hull for a given set of points.

Hull eccentricity is the ratio between width and height of the hull.

Black/white ratio is the ratio between the hull area and the area of the object .

Euler number indicates the number of holes in the object. It is defined as one minus the number of holes.

The number of sharp corners is computed as follows: first a polygonal approximation of the contours is generated. This approximation is generated several times, each time with a bigger error threshold. This is done as long as the number of polygon segments continues to drop linearly with respect to the increase of the error threshold. The last approximation is used for the evaulation of the number of sharp corners. A sharp corner is a corner in the approximating polygon which has an angle of less than 95 degrees.

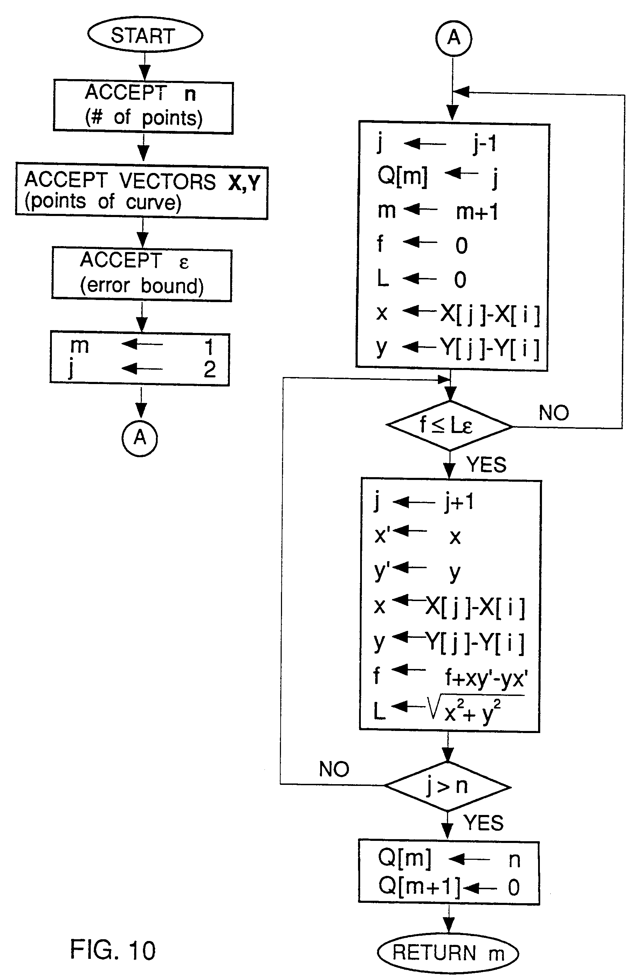

Fig. 10 is a flow chart illustrating one algorithm that may be used for performing a polygonal approximation operation in the object measurement step (e).

## Object Classification (Block 26)

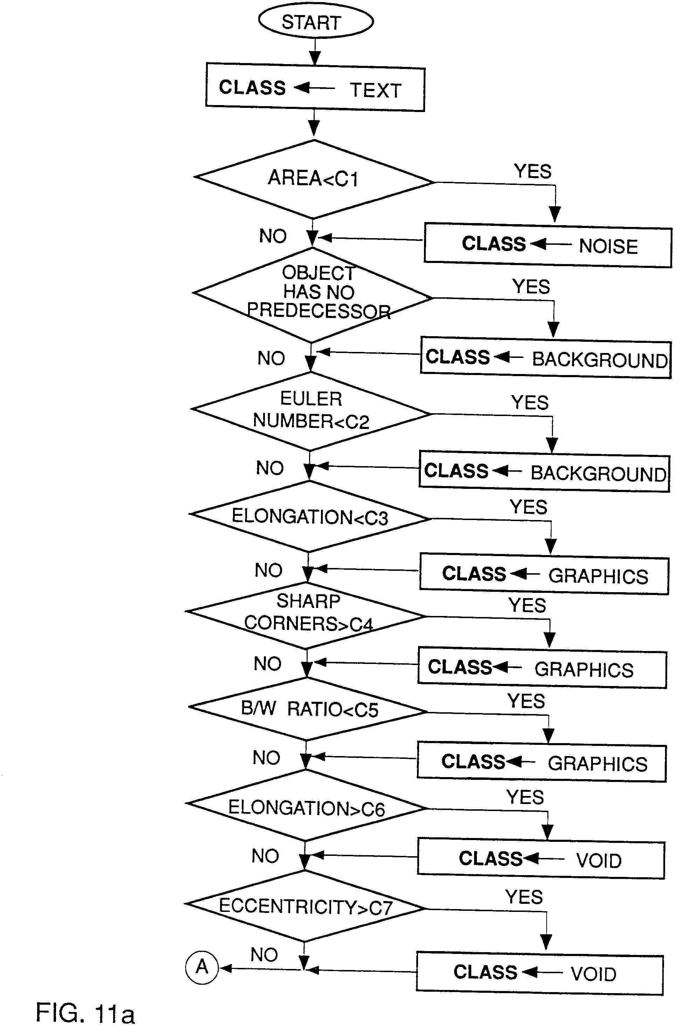

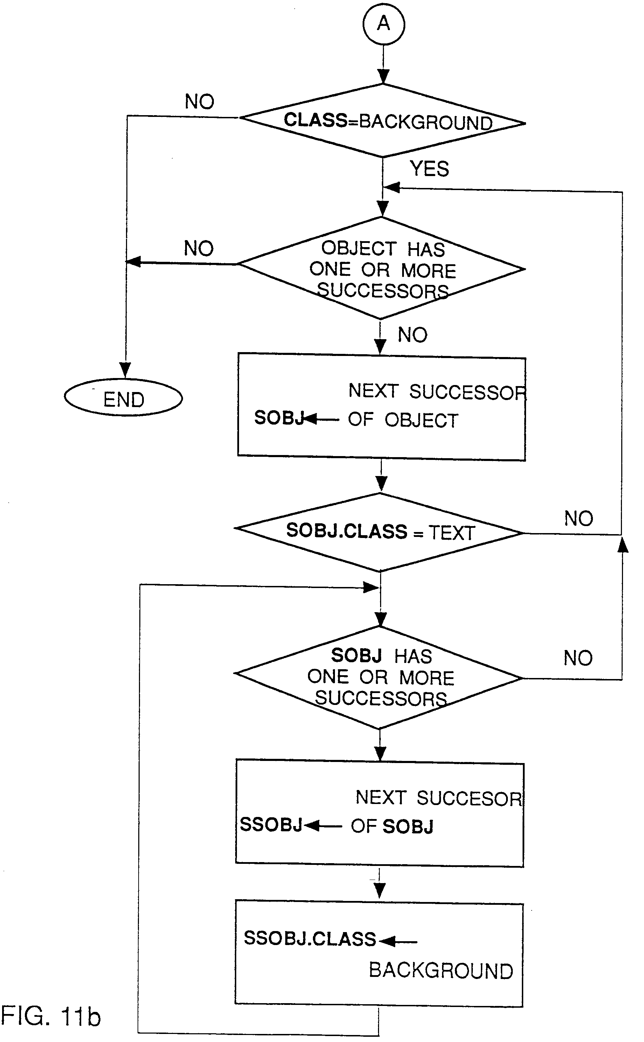

This step involves classifying the objects as graphics or text. In this step, the objects are traversed in a bottom-up fashion and are classified according to the measurements taken in the previous step, and according to the classes that were given to the successive objects in the tree. The classification is done according to a set of predefined rules and thresholds. Appendix C is an example of such rules and thresholds as illustrated in the flow diagrams of Figs. 11a and 11b.

## Output Generation (Block 27)

This step involves generating outputs representing text and graphics, as illustrated by documents 4 and 6, respectively, Fig. 1.

In this step, the original image is read again and written back in different colours. White pixels remain white, but black pixels change according to the class of the object to which they reside (each class is assigned a different colour). Two adjacent black pixels are never painted in different colours because the dilation operation prevents them from being associated with different objects; therefore, it prevents them from having different classes, and thus different colours.

After the black pixels are repainted, the whole process can be repeated for the white pixels. That is, if it is necessary to discrimate between the various white objects, the steps of blocks 21-27 of the flow chart of Fig. 2 should be carried out again, but this time step 2 (block 22), namely the dilation step, should be performed on the white pixels and not on the black pixels.

The problem of output generation is actually reduced to the problem of finding for each black pixel the object in which it resides. This object directly defines the class, and the class defines the new colour for that pixel.

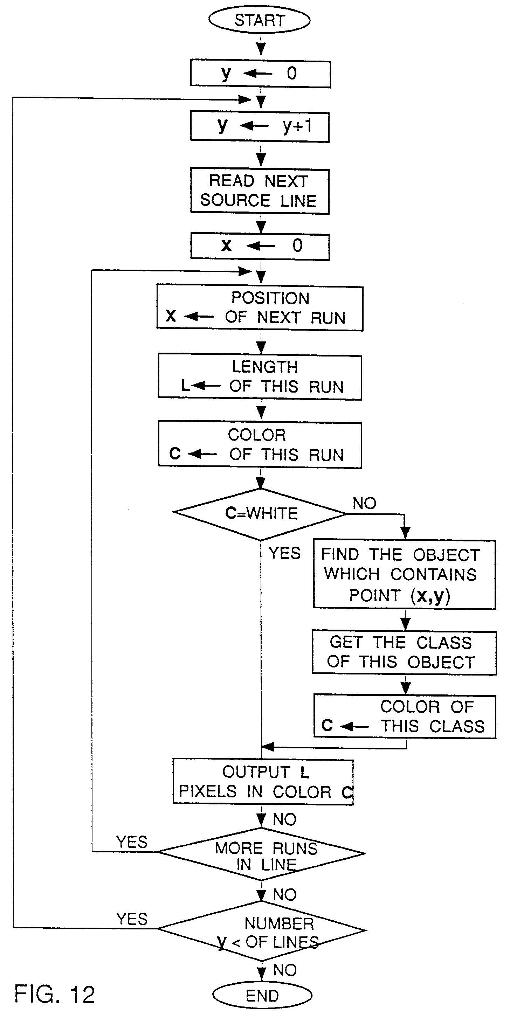

One algorithm which may be used for output generation, as illustrated in Fig. 12, is illustrated in the attached Appendix D.

The invention has been described with respect to one preferred embodiment, but it will be appreciated that many variations and other applications of the invention may be made.

While the flow diagram of Fig. 2 illustrates the steps as performed sequentially, such steps can be, and preferably are, performed in pipeline fashion. Thus, during scanning via the input window, as soon as an end of an object is determined, processing of the output of the object can be started from the highest line of the object.

## APPENDIX A

The following is an algorithm for dilation of run-length coded image.

$d$ - distance threshold.
$line_i$ - input line number $i$.
$line_i'$ - output line number $i$.
$strip_i$ - batch of $2d+1$ lines ($line_{i-d}, ..., line_{i+d}$).

1. initialize brush-vector: $b[i] \leftarrow \lfloor \sqrt{(d+\frac{1}{2})^2 - i^2} \rfloor$, $\quad -d \leq i \leq d$
2. initialize lines-counter: $j \leftarrow 0$
3. clear $line_i$ , $\quad -d \leq i < 0$
4. read first $d$ lines into $line_0, line_1, ... , line_{d-1}$
5. **while** not end-of-file **do**
6.      clear $line_j'$
7.      read next input line into $line_{j+d}$
8.      partition $strip_j$ into patterns: $P_1, P_2, ... , P_n$
9.      **for** each $P_k$ , $\quad 1 \leq k \leq n$ **do**
10.          **if** $P_k$ is not totally WHITE (not zero) **then**
11.            set LEFT, RIGHT to mark the left and right margins of $P_k$
12.            find minimal $|i|$ for which $P_k[i]$ is BLACK
13.            insert black run $[LEFT-b[i], RIGHT+b[i]]$ into $line_j'$
14.          **end**
15.      **end**
16.      output $line_j'$
17.      $j \leftarrow j + 1$
18. **end**

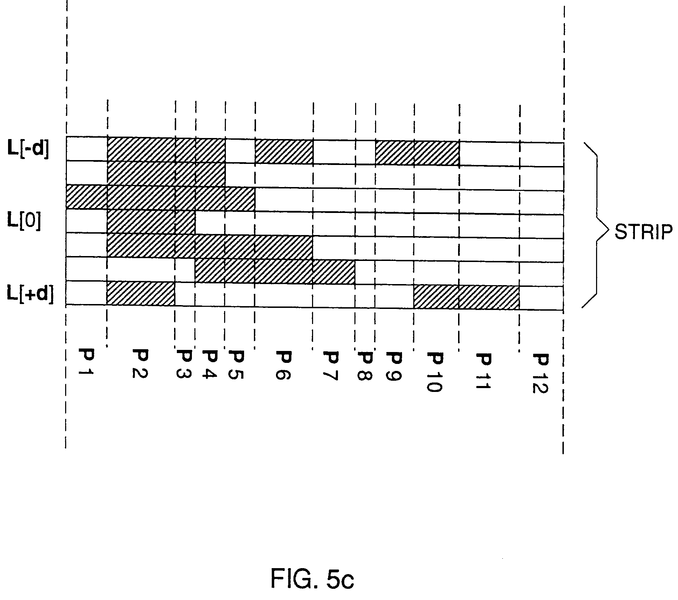

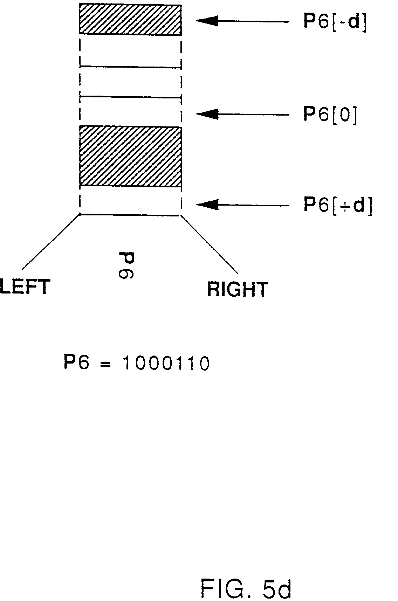

A pattern is a slice in a strip that contains $2d+1$ line segments which start and end at the same coordinate (see figure 5c). A pattern is maximal in the sense that it is the widenst slice that contains no color transitions along the line segments which constitutes the pattern. $P_k[i]$ is the color of the $i'$th line-segment in $P_k$ (see figure 5d).

## APPENDIX B

Input: image given run-length format.
Output: list of *objects* and *chains*.

An *object* contains:
  a. color-code describing the color of the object.
  b. area of object (number of pixels)
  c. pointers to the chains which partition the contour of the object.
A *chain* contains:
  a. chain-code describing a segment of contour.
  b. length of chain (number of links)
  c. pointers to the objects on both sides of the chain.

The algorithm uses the following variables:
  $x, y$ - pointers to current scan location.
  *line0, line1* - holds the contents of two successive input lines.
  *gchains* - list of "growing" chains.
  *chainp* - pointer to chain in *gchains*.

1.  frame the image (frame width = 1, frame color = WHITE)
2.  init *objects, chains, gchains*
3.  $y \leftarrow 0$
4.  read first line into *line0*
5.  **while** $y$ < height-of-image **do:**
6.      $x \leftarrow 0$
7.      read next line into *line1*
8.      set *chainp* to point at first chain in *gchains* list
9.      **while** $x$ < width-of-image **do:**
10.        advance $x$ to coordinate of next run
11.        identify state of colors in the 2×2 window centered at $(x,y)$
12.        handle this state (see figure 8)
13.      **end**
14.      $y \leftarrow y + 1$
15.      *line0* $\leftarrow$ *line1*
16. **end**

At step 1, the framing process can be done concurrently at the time the image is read (steps 4 and 7). At step 10, variable $x$ is advanced to the coordinate of minimal-run offset, thus, no run is skipped. Each run is processed twice - once as being a member of *line0* and once as a member of *line1*.

## APPENDIX C

The following is an algorithm for object classification.

1. *class* ← *TEXT*
2. **if** *area* < $C1 \cdot resolution^2$ **then** *class* ← *NOISE*
3. **if** *object* has no predecesor **then** *class* ← *BACKGROUND*
4. **if** *Euler number* < *C2* **then** *class* ← *BACKGROUND*
5. **if** *elongation* > *C3* **then** *class* ← *GRAPHICS*
6. **if** *sharp corners* > *C4* **then** *class* ← *GRAPHICS*
7. **if** *B/W ratio* < *C5* **then** *class* ← *GRAPHICS*
8. **if** *elongation* > *C6* **then** *class* ← *VOID*
9. **if** *eccentricity* > *C7* **then** *class* ← *VOID*
10. **if** *class* is *BACKGROUND* **then**
11.    **for** each succesor object - *sobj* **do:**
12.      **if** class of *sobj* is *TEXT* **then**
13.        change the class of all succesors of *sobj* to *BACKGROUND*
14.    **end**

```
------------------------
Constant       Value
========================
   C1           0.25
   C2           -8
   C3           90
   C4           20
   C5           0.05
   C6           25
   C7           15
========================
```

## APPENDIX D

The following is an algorithm for output generation.

$l$ - length of run.

$c$ - color of run.

$x,y$ - coordinates in the image.

```
1.  y ← 0
2.  while not end-of-file do
3.      y ← y + 1
4.      read next line from source file
5.      x ← 0
6.      while more runs in line do
7.          x ← staring position of next run
8.          l ← length of this run
9.          c ← color of this run
10.         if c ≠ WHITE do
11.             find the object obj which contains point (x,y)
12.             class ← obj.class
13.             c ← color[class]
14.         endif
15.         output run of l pixels in color c
16.     end
17. end
```

In step 11 the object which contains point $(x,y)$ is searched. This search can be simplified greatly if the chains discovered in the phase of contour detection are recorded to be used in this phase. These chains always start at maximal points and progress in pairs downwards. Therefore, the algorithm can track while progressing downwards in the file, which pairs of chains are active at a specific line and use this knowledge to find the objects which spans between each pair of chains.

This knowledge can even be used to make the process possible in pipeline. The output generation will be triggered by signals from the classification module that a new object is completely discovered and classified.

**Claims**

1. A method of analyzing a source image to separate text from graphics, comprising:
   (a) scanning and digitizing the source image to obtain a binary image including black and white objects;
   (b) filtering out the noise from the binary image to obtain a filtered binary image;
   (c) extracting the contours of the black objects and the white objects from the filtered binary image;
   (d) evaluating inclusion relationships between the objects, and generating a tree-like structure of such relationships;
   (e) utilizing said contours for measuring the objects to obtain the shape properties of each object;
   (f) effecting classification of the objects as graphics or text according to the measured shape properties and then generating tree-like structure of the inclusion relationships;
   (g) and utilizing said source image and said classification of the objects for generating outputs representing graphics and text, respectively.

2. The method according to Claim 1, wherein in step (b), the noise is filtered out by dilation of the black pixels.

3. The method according to either of Claims 1 or 2, wherein in step (e), the objects are measured in a top-down sequence, starting with the object at the root of the tree.

4. The method according to any one of Claims 1-3, wherein in step (c), extracting the contour of the black objects and the white objects from the filtered binary image is effected by a single scan in which a window is convolved with the filtered binary image in a raster fashion.

5. The method according to Claim 4, wherein the window scans the image along a line and returns an indication of the type of pattern seen from the window and an indication of the center of the window, each type pattern being processed differently to determine whether a new object is started, continued or ended, all objects intersecting the current scan line being processed in parallel.

6. The method according to Claim 5, wherein a maximal point encountered during the window scan is considered to be a starting point of a new object, but if later the scan indicates it was a maximal point of a previously indicated object, the new object is merged with that of the previously indicated object.

7. The method according to any one of Claims 1-6, wherein in step (d), the tree-like structure is generated by setting a pointer from each object to its predecessor, the predecessor of an object being found by determining which of the object contours is the outermost one, and then setting the pointer to point at the object on one side of that contour.

8. The method according to any one of Claims 1-7, wherein in step (e), the objects are measured to obtain the following shape properties of each object: area of the object, number of contours, and perimeter length of each contour.

9. The method according to Claim 8, wherein in step (e), the following additional properties are determined from the measured shape properties: elongation, hull area, hull eccentricity, black/white ratio, Euler number, and number of sharp corners.

10. The method according to Claim 9, wherein the number of sharp corners is determined by:
    generating several polygonal approximations of the contour, with each generation having a bigger error threshold, as long as the number of polygon segments drops linearly with respect to the increase in the error threshold;
    and determining that a sharp corner exists when the last polygon approximation has an angle of less than 60°.

11. The method according to any one of Claims 1-10, wherein in step (g), the generated outputs represeting graphics and texts are in the form of different images.

12. The method according to any one of Claims 1-10, wherein in step (g), the generated outputs representing graphics and texts are in the form of different colours of the same image.

13. The method according to any one of Claims 1-10, wherein the source image contains text of different sizes, orientationsand/or fonts.

13

**14.** The method according to Claim 2, wherein steps (a)-(g) are repeated, except the noise is filtered out in step (b) by dilation of the white pixels, so that white objects of the source image are separated, thereby providing discrimination of white text and graphics over black background.

**15.** The method according to any one of Claims 1-10, wherein the source image contains black text, white text, black graphics, white graphics, black and white background, and black and white noise.

SOURCE
DOCUMENT

8 INPUT
SCANNER

2

10

SOURCE
IMAGE
INPUT

12

IMAGE
DISK

14

MEMORY

16

CONTROL

CPU

TEXT/
GRAPHICS
IMAGE
OUTPUT

18 OUTPUT
PLOTTER

4

TEXT
WITHIN
DOCUMENT

6

GRAPHICS
WITHIN
DOCUMENT

FIG. 1

SOURCE

GRAPHICS

TEXT

FIG. 1a

START

21 — SCANNING AND DIGITIZATION OF IMAGE

22 — NOISE FILTERING USING DILATION OPERATOR

23 — CONTOUR DETECTION

24 — INCLUSION RELATION DETECTION

25 — OBJECT MEASURMENT

26 — OBJECT CLASSIFICATION

27 — OUTPUT GENERATION

END

FIG. 2

FIG. 3

FIG. 4

START

ACCEPT
PARAMETER **d**

ADD **d** WHITE LINES
AT THE BEGINING AND
END OF THE INPUT FILE

INITIALIZE VECTOR **b**

$$\mathbf{b}\,[\,i\,] \leftarrow \left\lfloor \sqrt{(\mathbf{d}+1/2)^2 - \mathbf{i}^2} \right\rfloor$$
FOR ALL **i**, $-\mathbf{d} \leq \mathbf{i} \leq \mathbf{d}$

READ FIRST
**2d** INPUT LINES
INTO LINE BUFFERS:
**L[-d]**, ... ,**L[d-1]**

B

MORE
INPUT LINES

NO

END

CLEAR OUTPUT-LINE
BUFFER **A**

READ NEXT INPUT LINE
INTO LINE BUFFER **L[d]**

PORTION THE STRIP
OF LINES FORMED BY
**L[-d]**,....,**L[+d]**
INTO PATTERN: **P**1,...,**P**n

A

FIG. 5a

20

(A)

| K ← 0 |

YES ← K ≥ n

OUTPUT LINE
DESCRIBED BY
**A** BUFFER

(B)

| K ← K + 1 |

IS **Pk**
TOTALLY WHITE → YES

SET **LEFT, RIGHT**
TO MARK MARGINS
OF **Pk**

FIND MINIMAL |i|
FOR WHICH **Pk[i]**
IS BLACK

INSERT A BLACK RUN
SPANNING FROM
**LEFT - b[i]** TO **RIGHT + b[i]**
INTO LINE BUFFER **A**

FIG. 5b

FIG. 5c

P6[-d]

P6[0]

P6[+d]

LEFT    P6    RIGHT

P6 = 1000110

FIG. 5d

61

62

FIG. 6a

OBJ. #1
(BACKGROUND)

A

B

D

C

OBJ. #2

F

E

G       H

OBJ. #3

I   OBJ. #4   J

A, ... ,J  ARE CHAINS

FIG. 6b

START

FRAME THE
IMAGE

GCHAINS LIST ← NULL

LINE0 ← FIRST
INPUT LINE

y ← 0

(A)

y ≤ HEIGHT OF
IMAGE

YES

END

y ← y + 1

LINE1 ← NEXT
INPUT LINE

CHAINP ← FIRST CHAIN
IN GCHAINS LIST

x ← 0

(B)

FIG. 7a

26

```
                                        ( B )
                                          │
                                          ▼
                              ╱─────────────────────╲
              NO            ╱      X ≤ WIDTH OF        ╲
        ┌───────────────────        IMAGE               ╲
        │                   ╲                           ╱
        │                     ╲─────────────────────╱
        │                                │
        │                               YES
        │                                │
        ▼                                ▼
 ┌─────────────────┐          ┌──────────────────────┐
 │                 │          │    ADVANCE X TO       │
 │ LINE0  ←  LINE1 │          │    COORDINATE         │
 │                 │          │    OF NEXT RUN        │
 └─────────────────┘          └──────────────────────┘
        │                                │
        ▼                                ▼
      ( A )               ┌──────────────────────────┐
                          │ IDENTIFY STATE OF COLORS  │
                          │   IN THE 2 x 2 WINDOW     │
                       71 │   CENTERED AT (x,y)       │
                          └──────────────────────────┘
                                         │
                                         ▼
                          ┌──────────────────────────┐
                          │     PROCESS THIS          │
                          │        STATE              │
                       72 │                           │
                          └──────────────────────────┘
                                         │
                                         ▼
                                       ( B )
```

FIG. 7b

| STATE | INTERPRETATION 1 | REQUIRED ACTION | INTERPRETATION 2 | REQUIRED ACTION |
|---|---|---|---|---|
| 1 | | | | |
| 2 | | | | |
| 3 | | | | |
| 4 | | NO ACTION | | |
| 5 | | | | |
| 6 | | | | |

→ CHAIN

↦ START OF CHAIN

→ END OF CHAIN

→* CHAIN WHICH **CHAINP** POINTS AT

# FIG. 8

FIG. 9

EP 0 516 576 A2

**FIG. 10**

START

ACCEPT **n**
(# of points)

ACCEPT VECTORS **X,Y**
(points of curve)

ACCEPT ε
(error bound)

m ← 1
j ← 2

Ⓐ

Ⓐ

j ← j-1
Q[m] ← j
m ← m+1
f ← 0
L ← 0
x ← X[ j ]-X[ i ]
y ← Y[ j ]-Y[ i ]

f ≤ Lε — NO

YES

j ← j+1
x' ← x
y' ← y
x ← X[ j ]-X[ i ]
y ← Y[ j ]-Y[ i ]
f ← f+xy'-yx'
L ← $\sqrt{x^2+y^2}$

j > n — NO

YES

Q[m] ← n
Q[m+1] ← 0

RETURN m

30

FIG. 11a

31

A

CLASS=BACKGROUND — NO

YES

OBJECT HAS ONE OR MORE SUCCESSORS — NO

END

NO

NEXT SUCCESSOR
SOBJ ◄— OF OBJECT

SOBJ.CLASS = TEXT — NO

SOBJ HAS ONE OR MORE SUCCESSORS — NO

NEXT SUCCESOR
SSOBJ ◄— OF SOBJ

SSOBJ.CLASS ◄— BACKGROUND

FIG. 11b

32

```
              ┌─────────┐
             ( START )
              └────┬────┘
                   ▼
            ┌──────────────┐
            │   y  ◄─  0   │
            └──────┬───────┘
    ┌──────────────▼──────────────┐
    │         ┌──────────────┐    │
    │         │  y  ◄─  y+1  │    │
    │         └──────┬───────┘    │
    │         ┌──────▼───────┐    │
    │         │  READ NEXT   │    │
    │         │ SOURCE LINE  │    │
    │         └──────┬───────┘    │
    │         ┌──────▼───────┐    │
    │         │   x  ◄─  0   │    │
    │         └──────┬───────┘    │
```

**POSITION**
X ◄─ OF NEXT RUN

**LENGTH**
L ◄─ OF THIS RUN

**COLOR**
C ◄─ OF THIS RUN

C=WHITE        NO ──►

YES

FIND THE OBJECT
WHICH CONTAINS
POINT (x,y)

GET THE CLASS
OF THIS OBJECT

COLOR OF
C ◄─ THIS CLASS

OUTPUT L
PIXELS IN COLOR C

NO

YES ◄── MORE RUNS
IN LINE

NO

YES ◄── NUMBER
y < OF LINES

NO

( END )

FIG. 12